# EUROPÄISCHE PATENTANMELDUNG

(11) **EP 1 142 539 A2**
(43) Veröffentlichungstag der Anmeldung: **10.10.2001**
(21) Anmeldenummer: 01108356.5
(22) Anmeldetag: 03.04.2001
(51) Int. Cl.: A61C 5/06

(54) **Einwegbehälter für dentale Füllungsmaterialien**

(30) Priorität: 08.04.2000 DE 10017655
(71) Anmelder: Degussa Dental GmbH & Co. KG, 63457 Hanau (DE)
(72) Erfinder: Both, Adam, 63454 Hanau (DE); Kläres, Ulrich, 53347 Alfter (DE); Luckau, Ralf, 63796 Kahl (DE)

(57) **Zusammenfassung**

Ein Einwegbehälter für dentale Füllungsmaterialien besteht aus einem den Nutzraum (5) umgebenden Behälterkörper (1), aus welchem das Füllungsmaterial mittels eines beweglichen Kolbens (4) durch eine Düse (2) auspressbar ist. Eine als gesondertes Bauteil ausgeführte Düse (2) ist an einer Verbindungsstelle (6) des Behälterkörpers (1) angebracht. Die Düse (2) weist einen rotationssymmetrischen Schaft sowie einen zurückgesetzte, radial vorspringenden Anschlag auf. Die Düse (2) kann an der entsprechend geformten Verbindungsstelle (6) mit dem Behälterkörper (1) verschweißt bzw. verklebt werden. Andere Ausführungen von Düsen können form- oder kraftschlüssig beispielsweise durch Schraub- oder Bajonettverschlüsse mit dem Behälterkörper (1) verbunden werden.

## Beschreibung

Die Erfindung betrifft einen Einwegbehälter für dentale Füllungsmaterialien, mit einem einen Nutzraum umgebenden Behälterkörper, aus welchem das Füllungsmaterial mittels eines axial beweglichen Kolbens durch eine Düse auspressbar ist.

Für Anwendungen in einer Zahnarztpraxis werden spezielle dentalmedizinische Produkte, wie beispielsweise lichtaushärtende Füllungsmaterialien, in Einwegbehältern abgefüllt. Solche Einwegbehälter beinhalten in der Regel eine für eine einmalige Anwendung ausreichende Menge des Füllungsmaterials, welches der Zahnarzt für die Restaurierung einer präparierten Zahnkavität benötigt. Für die Applikation des Füllungsmaterials in Zahnkavitäten wird ein dauerhaft verwendbares Instrument, ein sog. Applikator, eingesetzt. Der nach der Applikation entleerte Einwegbehälter mit einem geringen verbleibenden Rest an Füllungsmaterial wird nicht weiter verwendet.

Üblicherweise verwendete bekannte Einwegbehälter der eingangs genannten Gattung bestehen aus einem zylindrischen Behälterkörper, dessen eines Ende in Form einer abgewinkelten, leicht konischen Düse ausgestaltet ist. Die Düse wird mit einer Kappe verschlossen. Das andere Ende wird durch einen axial beweglichen Kolben verschlossen. Wird mit einem geeigneten Instrument, beispielsweise einem Applikator, der Kolben in den Behälterkörper gedrückt, so wird aus diesem das Füllungsmaterial durch die Düse entleert. In Abhängigkeit von der Viskosität verschiedener Füllungsmaterialien sind verschiedene Austrittsöffnungen, d.h. Düsen mit unterschiedlichem Durchmesser des Düsenkanals bei gleichbleibender Außenkontur, wünschenswert. Bisher bekannte Einwegbehälter werden deshalb durch unterschiedliche Formgebung der Düse bei gleichbleibenden äußeren Abmessungen des Einwegbehälters an das jeweilige Füllungsmaterial angepaßt.

Obwohl sich nur der Durchmesser der Austrittsöffnung verändert, muß deshalb ein ganz neuer Einwegbehälter hergestellt werden. Daraus resultieren erhöhte Fertigungs- und Lagerkosten der verschiedenen Einwegbehälter sowie lange Reaktionszeiten auf entsprechend den Anforderungen sich verändernde Eigenschaften des Füllungsmaterials.

Aufgabe der Erfindung ist es daher, einen Einwegbehälter der eingangs genannten Gattung so auszugestalten, daß mit geringem ökonomischen Aufwand, d.h. geringen Fertigungs- und Lagerhaltungskosten und schnellen Reaktionszeiten auf sich ändernde Marktbedürfnisse verschiedene Austrittsöffnungen realisiert werden können.

Diese Aufgabe wird erfindungsgemäß dadurch gelöst, daß die Düse als gesondertes Bestandteil ausgeführt und am Behälterkörper dicht angebracht ist.

Für eine optimale Anpassung des Einwegbehälters an unterschiedliche Füllungsmaterialien genügt es damit, allein die Form der Düse zu variieren. Der getrennt hergestellte Behälterkörper ist für viele unterschiedliche Füllungsmaterialien gleichermaßen geeignet und kann deshalb, wie auch die Kappe, in größeren Stückzahlen gefertigt werden.

Vorzugsweise ist vorgesehen, daß die Düse an der Verbindungsstelle einen hohlzylindrischen Anschlußstutzen mit einem zurückgesetzten, radial vorspringenden Anschlag aufweist und der Behälterkörper eine entsprechend ausgeformte Verbindungsbohrung besitzt. Ein zweckmäßig ausgebildeter Sitz gewährt als gleichbleibende Verbindungsstelle die größtmögliche Variation verschiedener Düsenausformungen.

Gemäß einer Ausgestaltung des Erfindungsgedankens ist vorgesehen, daß die Düse an der Verbindungsstelle mit dem Behälterkörper verschweißt ist. Der notwendige, geringe Mehraufwand für eine stabile Verbindung von Behälterkörper und Düse ist unerheblich im Vergleich mit den oben genannten Vorteilen einer zweigeteilten Gestaltung des Einwegbehälters. Zum Herstellen einer ausreichend stabilen stoffschlüssigen Verbindung sind beispielsweise Laser- oder Ultraschall-Schweißverfahren sowie Kleben besonders geeignet.

Einer Ausgestaltung des Erfindungsgedankens zufolge ist vorgesehen, daß die Düse durch einen Bajonettverschluß oder ein Schraubgewinde druckfest am Behälterkörper dicht angebracht ist. Damit können auch aus verschiedenen Materialien hergestellte Düsen und Behälterkörper dicht und druckfest mit geringem Aufwand verbunden werden. Eine weitestgehende Anpassungsmöglichkeit des zweigeteilten Einwegbehälters an verschiedene dentale Füllmaterialien sowie anwendungsspezifische Vorgaben wird dadurch ermöglicht.

Weitere vorteilhafte Ausgestaltungen des Erfindungsgedankens sind Gegenstand weiterer Unteransprüche.

Nachfolgend werden verschiedene Ausführungsbeispiele der Erfindung näher erläutert, welche in der Zeichnung dargestellt sind. Es zeigt:
Fig. 1 einen Schnitt durch einen Einwegbehälter für dentale Füllungsmaterialien, bestehend aus dem Behälterkörper, der damit nachträglich fest verbundenen Düse sowie dem axial beweglichen Kolben,
Fig. 2 einen Schnitt durch den Behälterkörper,
Fig. 3 einen Schnitt durch die stoffschlüssig mit dem Behälterkörper verbindbare Düse,
Fig. 4 einen Schnitt durch eine Düse mit Schraubgewinde,
Fig. 5 einen Schnitt durch eine Düse mit Bajonettverschluß und
Fig. 6 einen Schnitt entlang der Linie VI-VI in Fig. 5.

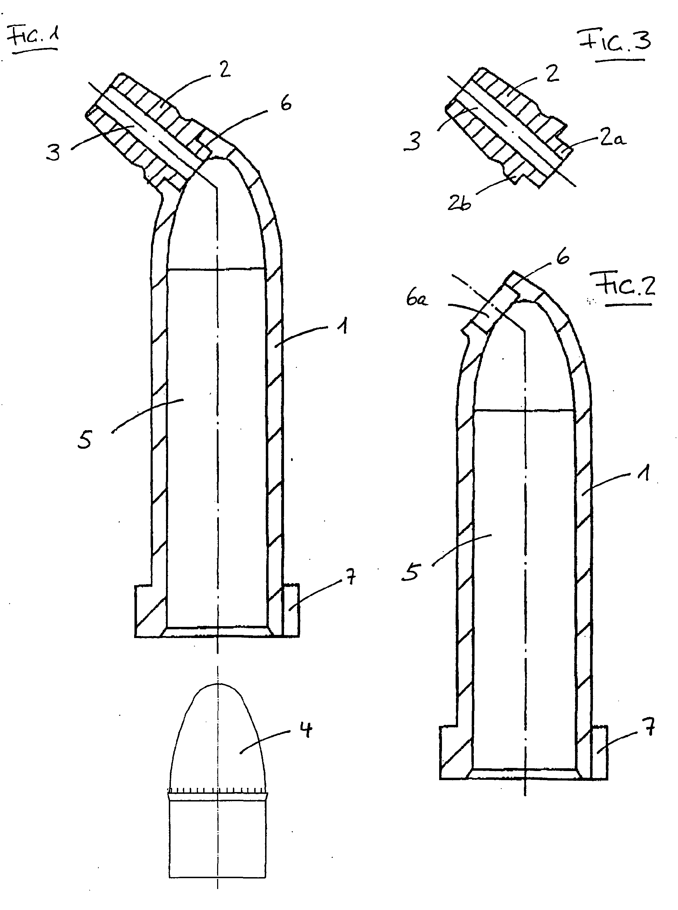

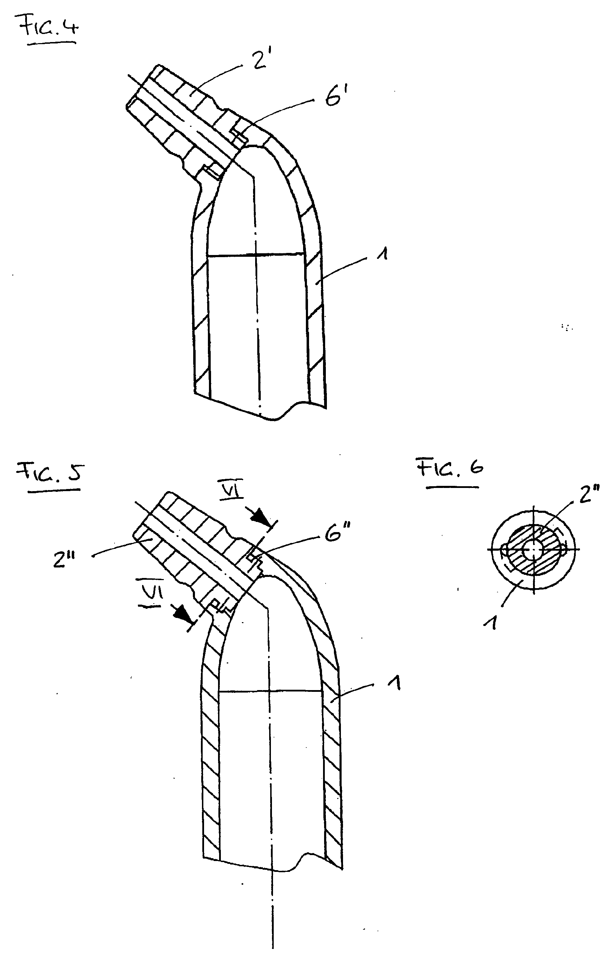

Der in Fig. 1 sowie jeweils in Einzelteilen in Fig. 2 und Fig. 3 dargestellte Einwegbehälter weist einen zylinderförmigen Behälterkörper 1 für dentale Füllungsmaterialien sowie eine an einem Ende des Behälterkörpers 1 abgewinkelt angebrachte, dicht verbundene Düse 2 auf, die beide beispielsweise aus Kunststoff bestehen. Die Düse 2 ist rotationssymmetrisch ausgeführt und besitzt einen innenliegenden Kanal 3, durch welchen das im Behälterkörper befindliche Füllungsmaterial auspressbar ist. Durch Druck auf einen axial beweglichen, den Behälterkörper 1 abschließenden Kolben 4 kann im Verlauf einer Anwendung das dentale Füllungsmaterial aus einem Nutzraum 5 des Behälterkörpers 1 durch die Düse 2 ausgepreßt werden.

Die Düse 2, dargestellt in Fig. 3, weist einen hohlzylindrischen Anschlußstutzen 2a mit einem zurückgesetzten, radial vorspringenden Anschlag 2b auf. An der Verbindungsstelle 6 von Behälterkörper 1 und Düse 2 befindet sich eine dem hohlzylindrischen Anschlußstutzen entsprechende Verbindungsbohrung 6a. Die Düse 2 ist an der Verbindungsstelle 6 beispielsweise durch Laser- oder Ultraschallschweißen bzw. Kleben stoffschlüssig am Behälterkörper 1 dicht angebracht. Bei unveränderter Formgebung der Verbindungsstelle 6 kann der Durchmesser des innenliegenden Düsenkanals 3 weitgehend variiert werden.

Ein radial vorspringender Rand 7 am offenen Ende des Behälterkörpers 1 dient einer besseren Druckfestigkeit des Einwegbehälters. Außerdem ergeben sich dadurch fertigungstechnische Erleichterungen bei der Positionierung des Einwegbehälters während der Befüllung in einer Abfüllanlage sowie während der Entleerung mit einem geeigneten Instrument, beispielsweise einem Applikator, im Rahmen einer zahnmedizinischen Anwendung.

Die in den Figuren 4, 5 und 6 gezeigten Schnitte veranschaulichen Ausführungsbeispiele der Düse (2', 2''), die im Bereich der entsprechend ausgeformten Verbindungsstelle (6', 6'') des Behälterkörpers (1) beispielhaft für formschlüssige oder kraftschlüssige Verbindungen ein Schraubgewinde (8), bzw. einen Bajonettverschluß (9) aufweisen.

## Patentansprüche

1. Einwegbehälter für dentale Füllungsmaterialien, mit einem einen Nutzraum umgebenden Behälterkörper, aus welchem das Füllungsmaterial mittels eines axial beweglichen Kolbens durch eine Düse auspressbar ist,
**dadurch gekennzeichnet,**
**daß** die Düse (2, 2', 2'') als gesondertes Bauteil ausgeführt und am Behälterkörper (1) dicht angebracht ist.

2. Einwegbehälter nach Anspruch 1,
**dadurch gekennzeichnet,**
**daß** die Düse (2) stoffschlüssig am Behälterkörper (1) dicht angebracht ist.

3. Einwegbehälter nach Anspruch 1,
**dadurch gekennzeichnet,**
**daß** die Düse (2) an der Verbindungsstelle (6) einen hohlzylindrischen Anschlußstutzen (2a) mit einem zurückgesetzten, radial vorspringenden Anschlag (2b) aufweist und der Behälterkörper (1) eine entsprechend ausgeformte Verbindungsbohrung (6a) besitzt.

4. Einwegbehälter nach Anspruch 1,
**dadurch gekennzeichnet,**
**daß** die Düse (2) an der Verbindungsstelle (6) mit dem Behälterkörper (1) verschweißt ist.

5. Einwegbehälter nach Anspruch 4,
**dadurch gekennzeichnet,**
**daß** die Düse (2) an der Verbindungsstelle (6) mit dem Behälterkörper (1) laserverschweißt ist.

6. Einwegbehälter nach Anspruch 4,
**dadurch gekennzeichnet,**
**daß** die Düse (2) an der Verbindungsstelle (6) mit dem Behälterkörper (1) Ultraschall-verschweißt ist.

7. Einwegbehälter nach Anspruch 1,
**dadurch gekennzeichnet,**
**daß** die Düse (2) an der Verbindungsstelle (6) mit dem Behälterkörper (1) verklebt ist.

8. Einwegbehälter nach Anspruch 1,
**dadurch gekennzeichnet,**
**daß** die Düse (2', 2") formschlüssig oder kraftschlüssig am Behälterkörper (1) dicht angebracht ist.

9. Einwegbehälter nach Anspruch 1 und 8,
**dadurch gekennzeichnet,**
**daß** die Düse (2', 2'') durch einen Bajonettverschluß oder ein Schraubgewinde druckfest am Behälterkörper (1) dicht angebracht ist.
